# EUROPÄISCHE PATENTANMELDUNG

(11) **EP 0 653 233 A1**
(43) Veröffentlichungstag der Anmeldung: **17.05.1995**
(21) Anmeldenummer: 94113217.7
(22) Anmeldetag: 24.08.1994
(51) Int. Cl.: B01D 21/00, E03F 5/10, E03F 5/14

(54) **Anlage zum Abscheiden von Leicht und/oder Sinkstoffen**

(30) Priorität: 25.08.1993 DE 9312708 U
(71) Anmelder: PASSAVANT-WERKE AG, D-65322 Aarbergen 7 (DE)
(72) Erfinder: Helffenstein, Kurt, D-65558 Flacht (DE)

(57) **Zusammenfassung**

Anlage zum Abscheiden von Leicht- und/oder Sinkstoffen aus Abwasser. Oberhalb der Zuführleitung (1,12) zum Abscheider ist ein als Puffer wirkendes Sammelgefäß (6) angeordnet, das über die Pumpe (7) bei entsprechender Stellung der Ventile (3,9,11) beschickt oder entleert werden kann. Zur Vermeidung von Entmischung im Sammelgefäß (6) kann der Inhalt bei geschlossenen Ventilen (3,11) und geöffnetem Ventil (9) umgepumpt werden.

## Beschreibung

Die Neuerung bezieht sich auf eine Anlage zum Abscheiden von Leicht- und/oder Sinkstoffen aus diese Stoffe enthaltenden Abwässern nach dem Schwerkraft- bzw. Dichteunterschiedprinzip.

Diese Abscheideranlagen enthalten immer ein Abscheidegefäß, das von den Abwässern beruhigt durchströmt wird. Das gereinigte Abwasser kann anschließend im freien Gefälle an die Kanalisation abgegeben werden.

Bei Anfallstellen in Gebäuden, z.B. Fettabscheidern von Küchen, sind die Abscheidegefäße meist freistehend im Keller oder in einer Grube eingelassen installiert. Der Einlauf des Abscheidegefäßes befindet sich demnach unterhalb des Abwasserablaufs aus der Anfallstelle. Es gibt Kellerräume, die unterhalb der Ebene des in der Kanalisation möglichen Rückstaus liegen. Für solche Einbaufälle ist es Vorschrift, eine Hebepumpe einzusetzen, die das gereinigte Abwasser über die Rückstauebene in die Kanalisation fördert.

Diese Technik hat den Nachteil, daß der Abscheider weit weg auf einer anderen Ebene untergebracht ist. Die Entsorgung wird daher oft über den vorgeschriebenen Zeitraum hinaus unterlassen. Die Aufgabe, diesen Nachteil zu vermeiden, wurde bereits durch die Installation eines Vorlagebehälters gelöst (DE-U 92 15 419), der auf gleicher Ebene wie die Anfallstelle montiert wird. Die als Pumpe ausgebildete Hebeanlage, die in den Vorlagebehälter integriert ist, fördert das Abwasser sozusagen dosiert in den jetzt ebenfalls auf gleicher Ebene installierten Abscheider. Aus diesem kann das gereinigte Abwasser im freien Gefälle in die Kanalisation fließen.

Dieser Vorlagebehälter ist noch keine optimale Lösung des Problems. Die mit Leicht- und ggf. Sinkstoffen befrachteten Abwässer verweilen zu lange in dem Behälter, bis sie in das Abscheidegefäß gefördert werden. Die lange Aufenthaltszeit bedeutet, daß sich die Abwasserinhaltsstoffe bereits abscheiden können und dann beim späteren Abpumpen in dem Abscheidegefäß verbleiben. Die neuerungsgemäße Lösung dieser Aufgabe sieht deshalb vor, zwischen die Zuführleitung zum Vorlagegefäß und die Weiterförderleitung zum Abscheidegefäß eine By-Pass-Leitung zu legen, die die Pumpe enthält, und die Zufuhrleitung und die Weiterförderleitung mit je einem Absperrorgan zu versehen. Das Absperrorgan für die Zuführleitung liegt vorzugsweise im Abzweig zum Vorlagegefäß. Mit dieser neuen Einrichtung ist es jetzt möglich, den Inhalt des Vorlagegefäßes vor oder während des Weiterförderns umzuwälzen und dabei die abgetrennten Stoffe wieder zu vermischen. Da die By-Pass-Leitung unter dem Niveau des Vorlagegefäßes liegt, ist es zweckmäßig, vor dem Abzweig ein Rückschlagventil vorzusehen, das den Rücklauf des Inhalts des Vorlagegefäßes verhindert und für eine vollständige Förderung in das Abscheidegefäß sorgt.

Weitere Merkmale der neuen Anlage sind der nachfolgenden Beschreibung von in den Zeichnungen dargestellten Ausführungsbeispielen zu entnehmen. Es zeigen:
- Fig. 1: eine Anlage mit unter dem Vorlagegefäß durchlaufender By-Pass-Leitung,
- Fig. 2: eine andere Anlage, bei der das Vorlagegefäß als Spülabscheider ausgebildet ist.

In die zum (nicht dargestellten) Abscheider führende Leitung 1 ist eingangs ein Grobfang 2 für versehentlich aus der Geschirrspülmaschine fortgespülte Gegenstände (Besteckteile usw.) integriert. Das in Fließrichtung nächste Installationsteil ist ein Rückschlagventil 3, das den Rückfluß von Abwasser in die tiefer gelegene Geschirrspülmaschine verhindert. Von der Weiterförderleitung 4, die als By-Pass 5 das Vorlagegefäß 6 unterquert, zweigt vor der Pumpe 7 eine Zuleitung 8 zum Vorlagegefäß ab. Die Zuleitung ist absperrbar (Ventil 9). Hinter der Pumpe 7 liegt der zweite Anschluß 10 des Vorgagegefäßes 6 an den By-Pass 5. Es folgen ein zweites Absperrventil 11 und die Weiterföderleitung 12 zum Abscheider. Hinter dem Absperrventil 11 liegt ein Durchfluß-Meßgerät 13 für die geregelte Förderung in den Abscheider.

Im Betrieb ist das erste Ventil 9 zunächst geschlossen und das zweite Ventil 11 geschlossen. Das Abwasser füllt auf Grund des Niveauunterschieds zunächst das Vorlagegefäß 6. Ab einer bestimmten Füllhöhe wird die Pumpe 7 eingeschaltet und füllt das Vorlagegefäß weiter. Das Rückschlagventil 3 verhindert, daß das Abwasser zur Geschirrspülmaschine zurückströmt. Sobald die obere Füllstandsmeßsonde Vollfüllung anzeigt, wird das erste Ventil 9 geöffnet, so daß jetzt der Inhalt des Vorlagegefäßes 6 intern umgewälzt wird. Dabei werden etwaige Ablagerungen und Schwimmschichten aufgewirbelt und mit Abwasser vermischt. Durch Öffnen des zweiten Ventils 11 beginnt die Weiterförderung zum höher gelegenen Abscheidegefäß. Beim Abschalten der Pumpe 7 verhindert das Rückschlagventil, daß Abwasser aus der Steigleitung 12 in die Geschirrspülmaschine zurückfließt. Der Inhalt läuft vielmehr in das Vorlagegefäß 6.

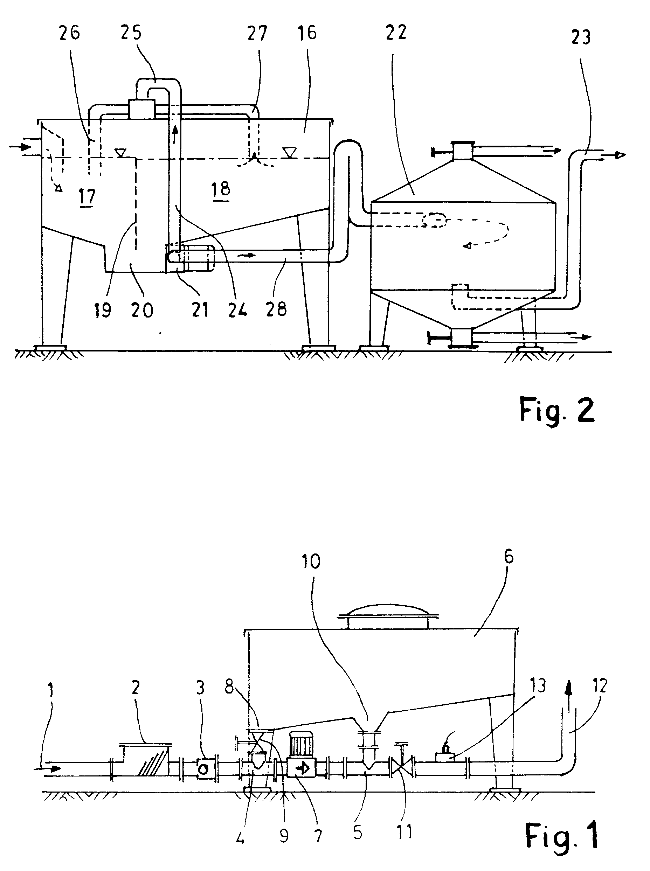

Die Anlage nach Fig. 2 enthält als Vorlagebehälter 16 einen kombinierten Abscheider mit Schlammfangkammer 17 und Abscheidekammer 18, die durch eine Überfallwand 19 von einandergetrennt sind. Sinkstoffe aus beiden Kammern sammeln sich in einem gemeinsamen Sumpf 20, an den eine Abförderpumpe 21 angeschlossen ist. Die bis hierher beschriebene Abscheideanlage kann die in einem Lebensmittel bereitenden Betrieb vorhandene Abscheideanlage sein. Wenn der Zwang erwächst, die Abwässer über eine Rückstauebene zu heben, dann kann diese Abscheideanlage um das neuerungsgemäße Vorlagegefäß erweitert werden. Hierfür wird der bisherige Abscheider 16 in das Vorlagegefäß umgebaut und ein neuer Abscheider 22 nachgeschaltet, dessen Reinwasserablauf 23 entsprechend hochgelegt ist. Der neue Abscheider 22 wird demnach ohne Freispiegel betrieben und bietet demzufolge den Vorteil, daß die Leichtstoffe, insbesondere Fette und organische Öle, luftfrei gesammelt und frisch rückgewonnen werden können.

Bei dem zum Vorlagegefäß 16 umgebauten alten Abscheidegefäß wird die Verrohrung insoweit geändert, als es jetzt keinen Reinwasserablauf aus der Abscheidekammer 18 mehr gibt. Die Druckleitung 24 der Pumpe 21 enthält neben der Speiseleitung 25 für die beiden Aufwirbeleinrichtungen 26, 27 eine absperrbare Weiterförderleitung 28. Nach dem Umwälzen und Aufwirbeln wird der Inhalt des Vorlagegefäßes 16 in den Abscheider 22 überführt und dadurch angehoben. Der Vorteil einer solchen vorübergehenden Speicherung in einem Vorlagegefäß ist vor allem darin zusehen, daß Stoßbelastungen nicht bis zum Abscheider durchschlagen. Der Abscheider wird mit dem Auslegungsvolumenstrom beaufschlagt.

## Patentansprüche

1. Anlage zum Abscheiden von Leicht- und/oder Sinkstoffen aus diese Stoffe enthaltenden Abwässern, bestehend aus einem Abscheidegefäß und einem diesen vorgeschalteten, tieferliegenden Vorlagegefäß mit Förderpumpe, **dadurch gekennzeichnet**, daß die Zufuhr- und Weiterförderleitung (4, 5) zum Abscheidegefäß unter dem Vorlagegefäß (6) als By-Pass vorbeigeführt ist und die Pumpe (7) enthält, und daß vor und hinter der Pumpe (7) absperrbare Leitungen (8, 10) zum Vorlagegefäß (6) abgezweigt sind.

2. Anlage nach Anspruch 1, **dadurch gekennzeichnet**, daß die Zufuhrleitung (4) vor der ersten Abzweigleitung (8) ein Rückschlagventil (3) aufweist.

3. Anlagen nach Anspruch 1 oder 2, **dadurch gekennzeichnet**, daß die Zufuhrleitung (4) vor der ersten Abzweigleitung (8) einen Fang (2) für Grobstoffe aufweist.

4. Anlagen nach Anspruch 1 bis 3, **dadurch gekennzeichnet**, daß die Weiterförderleitung (5, 12) einen die Pumpe (7) und/oder die Absperrventile (9, 11) steuerndes Durchfluß-Meßgerät (13) enthält.

5. Anlage nach Anspruch 1 bis 4, **dadurch gekennzeichnet**, daß das Vorlagegefäß als Abscheidebehälter (16) mit einer Misch- und Spüleinrichtung (25, 26, 27) ausgebildet ist, die von der Pumpe (21) beaufschlagt ist.
